# EUROPEAN PATENT APPLICATION

(11) **EP 4 492 342 A1**
(43) Date of publication of application: **15.01.2025**
(21) Application number: 23184627.0
(22) Date of filing: 11.07.2023
(51) Int. Cl.: G06V 40/10

(54) **A METHOD AND SYSTEM FOR DETERMINING HUMAN HAND MEASUREMENTS**

(71) Applicant: Mölnlycke Health Care AB, 402 52 Göteborg (SE)
(72) Inventor: KWON, Jhung-Ha, POTTERS BAR, EN6 2BW (GB); DZIAK, Katherine L, ALPHARETTA, 30004 (US); MORRIS, Kevin, ATWORTH, SN12 8LD (GB)
(74) Representative: Kransell & Wennborg KB

(57) **Abstract**

The present disclosure generally relates to a computer implemented method for determining human hand measurements based on collected image data of the human hand. To increase a reliability of the hand measurements, a novel calibration scheme is applied where a thickness of the hand is taken into account when the hand measurements are calculated. The present disclosure also relates to a corresponding computer system and computer program product.

## Description

### TECHNICAL FIELD

The present disclosure generally relates to a computer implemented method for determining human hand measurements based on collected image data of the human hand. To increase a reliability of the hand measurements, a novel calibration scheme is applied where a thickness of the hand is taken into account when the hand measurements are calculated. The present disclosure also relates to a corresponding computer system and computer program product.

### BACKGROUND

The selection of an item for interfacing with a human body part, such as e.g. a glove or a shoe, etc., is greatly influenced by individual differences in size and preference for fitting comfort. When visiting a physical store, it is possible to get assistance in determining a suitable size for the exemplary glove or shoe. One of the most commonly used devices for manually measuring a hand for glove fitting is to use a measuring tape, and for manually measuring a foot it is common to use a Brannock device. This Brannock device includes two levers slidably mounted upon a labeled platform for determining the length and width of a particular foot.

The manual and imprecise nature of the measuring tape as well as in relation to the Brannock device has led to efforts for improvement. Thus, apparatus and methods for analyzing body parts using electronics and digital technology, such as pressure sensors, optical sensors, and other devices have been developed. An example of such an apparatus is the use of various three-dimensional (3D) scanning arrangements positioned in the physical store and operated to generate data used by human experts as part of the human experts' product recommendation process. There are also embodiments of 3D scanning systems that utilize various software systems to replace the human expert.

The trend is however moving away from physical stores towards general online purchasing of products. One problem with online purchasing is that the end user does not have confidence in the item that is being purchased. This is specifically relevant for specialized gloves or shoes, where a precise fit is of a high importance. Furthermore, due to variations in sizes offered by various manufacturers, an end user can never be certain that the purchased item will fit properly.

To increase the consumer confidence when making an online purchase, it has been suggested to scan the relevant body part at home using an electronic device, such as a mobile phone equipped with a camera, and to get a recommendation of a suitable item based on images captured and processed by e.g. the mobile phone. Recent advances in mobile computing technology in combination with better sensors have allowed for the possibility to take a step further and to reconstruct a volume of the relevant body part, i.e. the hand or the foot as discussed above, to allow for a better determination of an improved fit of the related body part item.

An example of such an implementation is presented in US8908928. US8908928 specifically suggests a method for generating a size measurement of a body part of person for fitting a garment (such as a shoe, boot, shirt, blouse, jacket, short, pant, skirt, hat, glove, eyeglasses, or the like), and includes providing photographic data that includes images of the body part and using feature extraction techniques to create a computer model of the body part. Also, US8908928 focuses on measures for allowing a user to, in a home environment, identify garments that could be suitable and fitting. However, the solution in US8908928 relies heavily on high quality image data to be able to generate reliable size measurements. Obviously, such an approach is in clear contradiction with user operation in a home environment, where image capturing conditions may be greatly varying based on user operation. The method as presented in US8908928 may thus result in improper fitting between the body part and the garment.

Taking the above into account, there seems to be room for further improvements in relation to assisting a user in selecting the best matching item for a user body part, where the matching is executed with higher reliability and less subjectiveness as compared to prior-art.

### SUMMARY

In view of above-mentioned and other drawbacks of the prior art, it is an object of the present disclosure to provide improvements in relation to efficient measurements of a body part, with specific focus on ensuring that specialized body part items, such as gloves, can be reliably selected and ensured to properly fit an end user's hand.

According to an aspect of the present disclosure, it is therefore provided a computer implemented method for determining human hand measurements, wherein the method comprises the steps of acquiring, by a processing unit and using a data capturing arrangement, a first set of data representative of a surface located within a predetermined distance range from the data capturing arrangement, determining, by a processing unit, a distance to the surface based on the first set of data, acquiring, by the processing unit and using the data capturing arrangement, a second set of data representative of a human hand positioned at the surface, identifying, using the processing unit, a first hand feature and a second hand feature within the second set of data, and determining, by the processing unit, a distance between the first hand feature and the second hand feature, based on both of the determined distance to the surface and a defined thickness of the human hand.

By means of the present disclosure it is made possible to in a better and swifter way ensure that an untrained end user in an automated fashion can be allowed to form a better understanding of a size of his hand. That information may in turn be used for selecting a best fitting glove for the hand.

The general idea behind the present disclosure is that it is generally insufficient to only rely on the general schemes employed by modern data capturing arrangements for capturing reliable hand measurements, when the hand is typically located in a relatively close distance from the modern data capturing arrangement. The reliability of the hand measurements has been identified as of extra high importance in cases where specialty gloves are to be fitted to an end user's hand, where such specialty gloves for example includes gloves used within the medical field, such as within a hospital and for use in relation to a surgical procedure where the best possible fit is desirable to ensure that the surgical procedure can be performed with the highest possible quality.

When determining a distance between two points (such as the first hand feature and the second hand feature, typically being a horizontal distance) on the hand using an automated process involving a digital data capturing arrangement, it is necessary to also determine the distance between the data capturing arrangement and an upward facing side of the hand. The distance, typically being a vertical distance that is essentially perpendicular to the horizontal distance mentioned above, between the data capturing arrangement and the upward facing side of the hand is used for correctly scaling the horizontal distance.

However, determining the distance between the data capturing arrangement and the upward facing side of the hand has shown problematic, resulting in incorrect and non-reproduceable measurements. To ensure that the hand measurements are of the high reliability as needed, the inventors have identified that it is needed to introduce further steps in the measurement process, including compensating for a defined thickness of the hand. Therefore, in accordance to the present disclosure a distance to the surface where the hand is to be positioned is compensated by subtracting the defined thickness of the hand.

Accordingly, when determining the distance between two separate hand features, a corrected distance between the data capturing arrangement and an upward facing surface of the hand is used, rather than the total distance between the data capturing arrangement and the surface where the hand is positioned, where the downward facing side of the hand is in contact with the surface.

The scheme of using a distance to the surface subtracted by defined thickness of the hand is used rather than using the data capturing arrangement for directly estimating the distance to the upward surface of the hand has shown to improve the measurements with approximately 5-10%, when the hand is measured from a distance of approximately 30 cm (i.e. being within the above discussed predetermined distance range). Obviously, for specialty type gloves such an increase in correct hand measurement will provide for a better possibility of determining a correctly sized glove for the end user's hand.

It is generally desirable, but not necessary, to ensure that the surface where the hand is to be positioned is extending somewhat perpendicular to the data capturing arrangement and preferably essentially flat, whereby the upward facing side of the hand will be captured from a "top view". It is further preferred to ensure that the surface is free from clutter. In some embodiments it may also be preferred to refrain from selecting a surface which is glossy, possibly disturbing the measurement procedure. Preferably, the predetermined distance between the surface and the data capturing arrangement is selected to be within a range of 20-50 cm, preferably 30-40 cm.

Within the context of the present disclosure, the first hand feature and the second hand feature may be any identifiable feature present within a hand, including for example distal ends of fingers, end points on the side of the hand at an upper palm of the hand, end points on the side of the hand at a lower palm of the hand, etc.

Furthermore, within the context of the present disclosure the data capturing arrangement may be arranged to comprise one or a plurality of sensors used for capturing information (i.e. the first and the second set of data) that can be used by the processing unit to determine the distance to the surface as well as for identifying the first hand feature and the second hand feature.

For example, in some embodiments of the present disclosure the data capturing arrangement may include a time-of-flight (TOF) based sensor, such as a LIDAR sensor to be used in distance determination, and one or a plurality of image sensors to be used in capturing an image of the hand and for identifying the first and the second hand features. It may also be possible and within the scope of the present disclosure to make use of other sensor types, including for example a radar, a laser scanner, an inertial measurement unit, a structured light projector, a stereoscopic imaging arrangement, a heat sensor, etc. Other sensors systems, present and future, are of course possible and within the scope of the present disclosure. It may of course be possible to combine more than one sensor with the data capturing arrangement, such as for example an image capturing device and a LIDAR arrangement. In a preferred embodiment the data capturing arrangement comprises both a LIDAR sensor and an image sensor, where the LIDAR sensor is arranged to capture the first set of data and the image sensor is arranged to capture the second set of data.

According to the present disclosure, it is desirable to have available information as to the spatial relationship between the TOF sensor and the image sensor, thereby allowing for the difference therebetween to be used when determining the distance between the first hand feature and the second hand feature.

The identification of the hand features may in some embodiments be implemented using feature extraction from the second set of data captured using the data capturing arrangement. Such feature extraction techniques are well known in the technical field.

In line with the present disclosure and as discussed above, a defined thickness of the hand is subtracted from the distance to the surface where the hand is positioned. The defined thickness may in some embodiments be selected to be a fixed thickness, that is applied to all measurements performed. Applying a fixed thickness may provide advantages in relation to computational efficiency and ease of determining the hand measurements according to the present disclosure. Such a thickness may for example be selected to be at a fixed position within a range of 1.5-3.5 cm, since a majority of all hands will have a thickness somewhere within this range. In a preferred embodiment the fixed value is selected to be between 2.5-3.0 cm. In a possible embodiment the fixed value of the defined thickness of the hand is selected to be 2.7 cm.

It may however, as an alternative, be possible to allow the defined thickness of the hand to correspond to an estimation of the thickness of the hand that is currently being measured. In such an embodiment it may be possible to first apply a fixed (initial) value for the thickness of the hand, and then once the distance between the first hand feature and the second hand feature has been determined, it could be possible to select an updated hand thickness that more correctly relates to the actual thickness of the hand. As an example, it is generally assumed that the thickness of the hand correlate to the width of the hand, where a wider hand generally will be thicker as compared to a narrower hand. Accordingly, if the distance between the first hand feature and the second hand feature in fact corresponds to the width of the hand, then a corrected thickness of the hand may be determined. A linear scale factor may for example be applied in such an embodiment, where the width of the hand being above 9 cm will be assumed have a thickness above 2.7 cm, etc., to be correspondingly applied in case of a narrower hand with a width below 7 cm. Once a "corrected" thickness of the hand has been determined, the processing unit may make use of this corrected thickness to update the distance between the first hand feature and the second hand feature.

In a preferred embodiment the distance to the surface is determined prior to the human hand being positioned at the surface. Accordingly, the data capturing arrangement will in such an embodiment be allowed to determine the distance to the surface in an undisturbed manner and with a clear view of the surface, which may allow for a highly reliable determination of the distance between the data capturing arrangement and the surface.

In an alternative embodiment, where the first set of data comprises a point cloud acquired using the above-mentioned TOF sensor and the second set of data comprises image data acquired using the above-mentioned image sensor, it may be possible to acquire the first and the second set of data essentially simultaneously. Such an embodiment may have advantages relating to the ease of use of the present methodology for hand measurements. However, since the TOF sensor will not have a perfectly clear view of the surface, it will be necessary to configure the TOF sensor to discriminate between the hand and the surface when determining the distance between the TOF sensor and the surface.

Once the distance between the first hand feature and the second hand feature has been correctly determined, it will be possible to proceed to determine a length and a width of the human hand being positioned at the surface. This process typically involves identifying further hand features, such as discussed above, where at least some of such further hand features relate to "end points of the hand", including the most distal point of the fingers, ends of the palm of the hand, and at least one feature relating to the position of the wrist of the hand. The distance between the first hand feature and the second hand feature can in this situation be used for correctly scaling any measurements between any and all further hand features that have been identified on the human hand being positioned at the surface.

In some embodiments, the first and second set of data acquired by the data capturing arrangement is used for forming a three-dimensional coordinate system (x, y, z), which possibly may be allowed to have a center point at the location of the data capturing arrangement. Similarly to the above, the length and width of a portion of the human hand being positioned at the surface may likewise be defined within the three-dimensional coordinate system. The expression "a portion of the human hand" may for example include a specific finger of the hand, the overall hand, a palm of the hand, etc.

Following the determination of the length/width of the hand or a portion of the hand, it may be possible to make use of such information for estimating a glove size. Such a determination may for example include matching known information about different gloves (e.g. stored in a database) with the determined lengths/widths. It may for example be possible to determine a best matching glove by determining an overall difference between the hand measurements and the known measurements of the hand (at a plurality of point of the hand), where some measurements may have an in comparison higher ranking as compared to other measurements. As an example, a width of the hand (palm) may be given a higher ranking (risk of cramp if to narrow) as compared to a width of the wrist (less risk of end user issues).

In a preferred embodiment of the present disclosure, the present scheme further comprises forming, by the processing unit, a user guidance by overlaying an instruction to the second set of data, the instruction comprises guidance to position the human hand on the surface, displaying, using the processing unit and a display screen, the user guidance on the display screen, determining, by the processing unit and, a present position of the human hand relative to the surface, and updating, by the processing unit, the user guidance based on the determined present position of the human hand. Accordingly, the end user performing the hand measurements may be given ongoing instructions in the form of augmented reality (AR), specifically to instruct the end user to correctly position his hand at the surface and relative to a device comprising the data capturing arrangement and used for forming the hand measurement.

According to another aspect of the present disclosure, there is provided a computer system for determining human hand measurements, wherein the computer system comprises a processing unit adapted to instruct a data capturing arrangement to acquire a first set of data representative of a surface located within a predetermined distance range from the data capturing arrangement, determine a distance to the surface based on the first set of data, instruct the data capturing arrangement to acquire a second set of data representative of a human hand positioned at the surface, identify a first hand feature and a second hand feature within the second set of data, and determine a distance between the first hand feature and the second hand feature, based on both of the determined distance to the surface and a defined thickness of the human hand. This aspect of the present disclosure provides similar advantages as discussed above in relation to the previous aspects of the present disclosure.

As discussed above, the data capturing arrangement may in some embodiments comprise a time-of-flight (TOF) sensor adapted to acquire the first set of data, and an image sensor adapted to acquire the second set of data. Similarly to the above discussion, other sensor types and combination of sensor types are possible and within the scope of the present disclosure.

In a preferred embodiment, the computer system is a handheld electronic device, such as for example a mobile phone or a tablet. The methodology according to the present disclosure may at least partly be provided in the form of an "app" being executed by the mobile phone. The handheld electronic device may in some embodiments be connected to the Internet, allowing the handheld electronic device to be provided with assistance in determining the hand measurements, such as by allowing some portions of the present scheme to be executed remotely at e.g. a server. The server may also in some embodiments hold information relating to different gloves and their corresponding measurements.

For instructing the end user when performing the hand measurements, it may be advantageous to provide the computer system (e.g. the handheld electronic device) with a display screen. The display screen may also be used for guiding the end user, using e.g. AR as discussed above.

According to a further aspect of the present disclosure, there is provided a computer program product comprising a non-transitory computer readable medium having stored thereon computer program means for operating a computer system adapted for determining human hand measurements, the computer system comprising a processing unit, wherein the computer program product comprises code for acquiring, by a processing unit and using a data capturing arrangement, a first set of data representative of a surface located within a predetermined distance range from the data capturing arrangement, code for determining, by a processing unit, a distance to the surface based on the first set of data, code for acquiring, by the processing unit and using the data capturing arrangement, a second set of data representative of a human hand positioned on the surface, code for identifying, using the processing unit, a first hand feature and a second hand feature within the second set of data, and code for determining, by the processing unit, a distance between the first hand feature and the second hand feature, based on both of the determined distance to the surface and a defined thickness of the human hand. Also this aspect of the present disclosure provides similar advantages as discussed above in relation to the previous aspects of the present disclosure.

A software executed by the processing unit for operation in accordance to the present disclosure may be stored on a computer readable medium, being any type of memory device, including one of a removable nonvolatile random access memory, a hard disk drive, a floppy disk, a CD-ROM, a DVD-ROM, a USB memory, an SD memory card, a solid state drive, other non-volatile flash based storage mediums, or a similar computer readable medium known in the art.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Fig. 1 schematically illustrates a computer system according to a currently preferred embodiment of the present disclosure,
Fig. 2 provides an illustrative set-up of capturing data in relation to a hand of a user,
Fig. 3 presents an exemplary flow of the steps of performing the method according to a currently preferred embodiment of the present disclosure, and
Fig. 4 presents exemplary features of a human hand.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness, and fully convey the scope of the present disclosure to the skilled person. Like reference characters refer to like elements throughout.

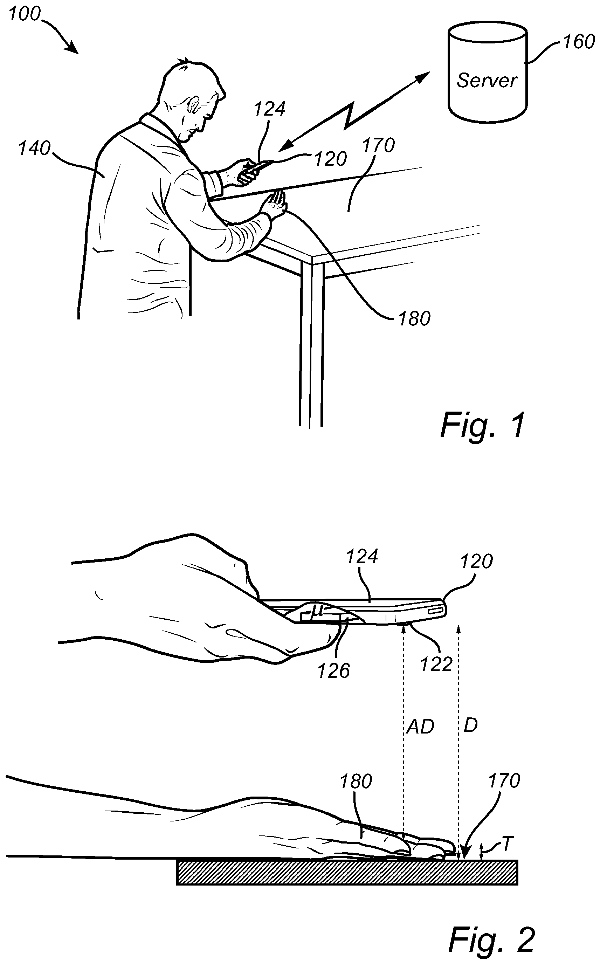

Turning now to the drawings and to Fig. 1 in particular, there is conceptually illustrated a computer system 100 adapted to determine human hand measurements when arranging a hand 180 at a surface 170 (preferably being an essentially horizontal surface), typically for use in determining a suitable glove to match the hand 180 that is being measured. The computer system 100 is in Fig. 1 illustrated as a "client-server" implementation comprising a mobile phone 120 operated by an end user 140 and a server 160 arranged remotely from the user 140 (not even necessarily within the same country as the user 140). Typically, the server 160 may be used for offloading computational heavy processing from the mobile phone 120.

The server 160 could be a dedicated physical server or a so-called cloud server. The server 160 and the mobile phone 120 are preferably connected with each other using a network connection, such as provided by means of an Internet connection. Any form of wired or wireless network protocol is possible and within the scope of the present disclosure. It should be understood that other types of remote processing implementations are possible, for example including a so-called "serverless setup".

It should be noted that the scheme according to the present disclosure could be implemented solely using the mobile phone 120, i.e. without the need for the server 160.

With further reference to Fig. 2, the mobile phone 120 is shown to include at least a data capturing arrangement 122, a display screen 124 and a processing unit 126. As indicated above, other types of user devices could be possible and fall within the scope of the present disclosure. Such user devices may for example include any device that provides visual feedback to the end user while capturing information about the end user's 140 hand 180.

The data capturing arrangement 122 may in turn comprise one or a plurality of sensors for collecting information relating to the hand of the user. Such sensors may for example include an image sensor (i.e. a camera), a LIDAR arrangement, a radar arrangement, a laser scanner, inertial measurement unit, structured light projector, stereoscopic imaging arrangement or a heat sensor, etc. Further sensors are of course possible and within the scope of the present disclosure.

For reference, the processing unit 126 (and/or processing functionality) may for example be manifested as a general-purpose processor, a graphics processing unit, an application specific processor, a circuit containing processing components, a group of distributed processing components, a group of distributed computers configured for processing, a field programmable gate array (FPGA), etc. The processor may be or include any number of hardware components for conducting data, signal and/or image processing or for executing computer code stored in memory. It may also be possible and within the scope to make use of system-on-chip (SOC) implementations. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

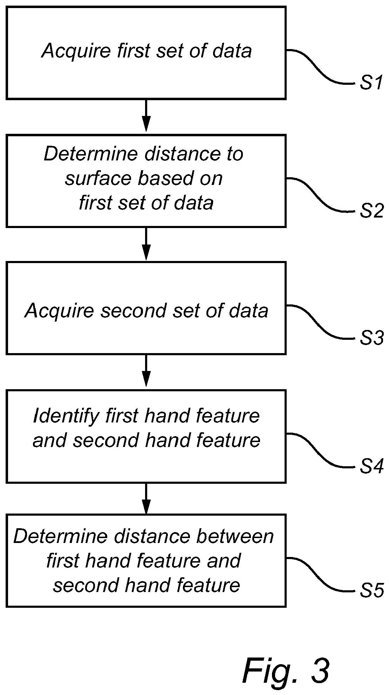

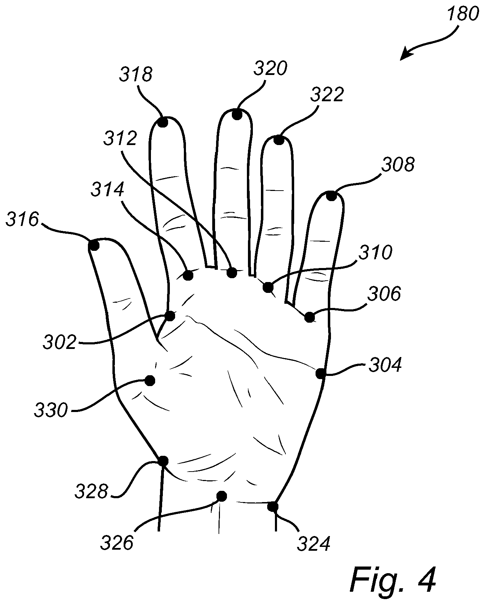

During operation of the computer system 100, with further reference to Figs. 3 and 4, the process may for example start by the user 140 operating an application being executed at the mobile phone 120, where the application has been adapted for acquiring measurements of the end user's 140 hand 180. It may of course be possible for a first person measuring a second (different) person's hand.

When initiating the application, a graphical user interface (GUI) presented at the display screen 124 of the mobile phone 120 will request the user to arrange the mobile phone 120 parallel to the horizontal surface 170, such as at approximately 30 cm from the surface. As indicated above, the surface 170 should preferably free from clutter to ensure that reliable measurements may be taken. The data capturing arrangement 122 will in parallel capture "intermediate data" that is used for measuring an "approximate distance" (on the fly) between the data capturing arrangement 122 and the surface 170. The approximate distance is used for guiding the user 140 in such a way that the mobile phone 120 and the surface 170 are separated by the required approximate 30 cm away from the surface 170. The present disclosure is however not limited to just 30 cm. Rather, the mobile phone 120 and the surface 170 may for example be positioned e.g. somewhere 20-50 cm apart.

The instructions at the GUI for guiding the user may in some embodiments include real time movement instructions to the user. In some embodiments the movement instructions could be provided by implementing an augmenting reality (AR) functionality, in combination with image data displayed at the display screen 124. The movement instructions are used for the above guidance of the mobile phone 120 relative to the surface 170.

Once the mobile phone 120 and the surface 170 are aligned and within the required distance apart, the data capturing arrangement 122 will acquire, S 1, a first set of data representative of the surface 170, and then use the first set of data to determine, S2, using the processing unit 126, a more exact distance (e.g. as compared to the above discussed approximate distance). The first set of data may for example include a so-called point cloud of data acquired by a LIDAR sensor comprised with the data capturing arrangement 122.

Once the distance has been determined, the user will be requested, using the GUI within the display screen 124, to keep the mobile phone 120 steady while positioning his hand at the surface 170, with one side of the hand 180 facing towards the data capturing arrangement 122 of the mobile phone 120.

Preferably, the data capturing arrangement 122 will acquired further intermediate information to allow a representation of the hand 180 to be visualized within the GUI, again in the form of AR functionality. The GUI may in some embodiments present a "hand outline" to urge the user towards positioning his hand correctly relative to the data capturing arrangement 122 to ensure that as much as possible to the hand can be captured by the data capturing arrangement 122. It may in some embodiments be advantageous to provide further movement instructions to the user for correct positioning of the hand 180, to urge the user to place the hand 180 flat at the surface 170.

Once the processing unit 126 in conjunction with the data capturing arrangement 122 has determined that the hand 180 is suitably located at the surface 170, the data capturing arrangement 122 is used for acquiring, S3, a second set of data representative of the hand 180. The second set of data may for example comprise image data acquired using an image sensor comprised with the data capturing arrangement 122.

The second set of data is in turn used for identifying, using the processing unit 126 (possibly in conjunction with the server 160), a first hand feature 302 and a second hand feature 304.

From reviewing Fig. 4, it can be seen that the first hand feature 302 and the second hand feature 304 are arranged at opposite side ends of the hand 180. However, it should be stressed that any features with a distance there between may be used in accordance to the scheme in line with present disclosure. Accordingly, for example any two features of the hand features 302, 304, 306, 308, 310, 312, 314, 316, 318, 320, 322, 324, 326, 328, 330 as are illustrated in Fig. 3 may be used as the first and the second hand feature. However, other features not exemplified in Fig. 4 may alternatively or also used in line with the present disclosure.

Once the first hand feature 302 and the second hand feature 304 has been identified, the processing unit 126 (possibly in conjunction with the server 160) is used for determining a distance therebetween. The distance between the first hand feature 302 and the second hand feature 304 is however not just taking into account the actual first hand feature 302 and the actual second hand feature 304. Rather, and as has been discussed above, the distance between the first hand feature 302 and the second hand feature 304 is also taking into account a defined thickness, T, of the hand 180.

That is, since the processing unit 126 has information as to the distance, D, between the surface 170 and the data capturing arrangement 122, it can subtract the defined thickness, T, of the hand 180, to thereby determine an "actual distance", AD, between the data capturing arrangement 122 and the upward facing side of the hand 180. The distance between the first hand feature 302 and the second hand feature 304 may therefore be determined, e.g. using at least partly a triangulation methodology, between the actual location of the first hand feature 302 and the second hand feature 304 at the upward facing side of the hand 180 relative to actual distance, AD to the data capturing arrangement 122. The thickness of the hand, T, is, as suggested above, selected to be somewhere between 1.5-3.5 cm.

The thickness, T, of the hand 180 that is used in the determination of the distance may in some embodiments be set to e.g. be around 2.7 cm, since such a thickness has been identified as a reasonable average hand thickness. However, as an alternative the GUI may include a questionnaire where the user is allowed to indicate if the user's 140 hand 180 is e.g. relatively thick, thin, average, etc. A gender of the user 140 may also be used for selecting a suitable thickness of the hand, where possibly a female hand may be thinner as compared to a male hand.

Preferably, distances between a plurality of, possibly all of, the hand features 302, 304, 306, 308, 310, 312, 314, 316, 318, 320, 322, 324, 326, 328, 330 illustrated in Fig. 3 are determined using the above outlined methodology. These distances may then be used in a subsequent process matching the determined distances with known measurements of different gloves. Accordingly, the user may possible be presented, within the GUI, with a matching score for different gloves. The GUI could possibly also include an option to acquire/purchase/order a glove that is determined to have a suitable matching score relative to the user's hand.

The matching between the determined distances and the available gloves may be based on statistical modelling. The suggested matching may be performed using the mobile phone 120 and/or the server 160.

Furthermore, the control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, solid state drives or other non-volatile flash based storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the present disclosure has been described with reference to specific exemplifying embodiments thereof, many different alterations, modifications and the like will become apparent for those skilled in the art.

In addition, variations to the disclosed embodiments can be understood and effected by the skilled addressee in practicing the claimed present disclosure, from a study of the drawings, the disclosure, and the appended claims. Furthermore, in the claims, the word "comprising" does not exclude other elements or steps, and the indefinite article "a" or "an" does not exclude a plurality.

## Claims

**1.** A computer implemented method for determining human hand measurements, wherein the method comprises the steps of:
- acquiring, by a processing unit and using a data capturing arrangement, a first set of data representative of a surface located within a predetermined distance range from the data capturing arrangement,
- determining, by a processing unit, a distance to the surface based on the first set of data,
- acquiring, by the processing unit and using the data capturing arrangement, a second set of data representative of a human hand positioned on the surface,
- identifying, using the processing unit, a first hand feature and a second hand feature within the second set of data, and
- determining, by the processing unit, a distance between the first hand feature and the second hand feature, based on both of the determined distance to the surface and a defined thickness of the human hand.

**2.** The method according to claim 1, wherein the defined thickness of the hand is selected to be between 1.5-3.5 cm.

**3.** The method according to claim 1, further comprising the steps of:
- correcting the thickness of the hand based on the determined distance between the first hand feature and the second hand feature, and
- updating the distance between the first hand feature and the second hand feature based on the corrected thickness of the hand.

**4.** The method according to any one of the preceding claims, wherein the distance to the surface is determined prior to the human hand being positioned on the surface.

**5.** The method according to any one of claims 1-3, wherein:
- the first set of data comprises a point cloud acquired using a time-of-flight (TOF) sensor,
- the second set of data comprises image data, and
- the first set of data is acquired essentially simultaneously as the second set of data.

**6.** The method according to any one of the preceding claims, wherein the predetermined distance range is 20-50 cm, preferably 30-40 cm.

**7.** The method according to claim 5, wherein the TOF sensor and the image sensor are positioned in a known spatial relation with each other.

**8.** The method according to any one of the preceding claims, further comprising the steps of:
- determining, by the processing unit, a length and a width of the human hand being positioned on the surface, wherein the length and the width of the human hand is determined from the second set of data and the determined distance between the first hand feature and the second hand feature.

**9.** The method according to any one of the preceding claims, further comprising the steps of:
- forming, by the processing unit, a three-dimensional coordinate system based on the first set of data and the second set of data,
- determining, by the processing unit, at least one of a length and a width of a portion of the human hand being positioned on the surface.

**10.** The method according to any one of claims 8 and 9, further comprising the step of:
- estimating, by the processing unit, a glove size based on the length and the width of the human hand, or
- estimating, by the processing unit, a glove size based on the at least one of the length and the width of the portion of the human hand.

**11.** The method according to any one of the preceding claims, further comprising the steps of:
- forming, by the processing unit, a user guidance by overlaying an instruction to the second set of data, the instruction comprises guidance to position the human hand at the surface,
- displaying, using the processing unit and a display screen, the user guidance at the display screen,
- determining, by the processing unit and, a present position of the human hand relative to the surface, and
- updating, by the processing unit, the user guidance based on the determined present position of the human hand.

**11.** A computer system for determining human hand measurements, wherein the computer system comprises a processing unit adapted to:
- instruct a data capturing arrangement to acquire a first set of data representative of a surface located within a predetermined distance range from the data capturing arrangement,
- determine a distance to the surface based on the first set of data,
- instruct the data capturing arrangement to acquire a second set of data representative of a human hand positioned at the surface,
- identify a first hand feature and a second hand feature within the second set of data, and
- determine a distance between the first hand feature and the second hand feature, based on both the determined distance to the surface and a defined thickness of the human hand.

**12.** The computer system according to claim 11, wherein the data capturing arrangement comprises:
- a time-of-flight (TOF) sensor adapted to acquire the first set of data, and
- an image sensor adapted to acquire the second set of data.

**13.** The computer system according to any one of claims 11 and 12, wherein the computer system is a handheld electronic device.

**14.** The computer system according to claim 13, further comprising a display screen.

**15.** A computer program product comprising a non-transitory computer readable medium having stored thereon computer program means for operating a computer system adapted for determining human hand measurements, the computer system comprising a processing unit, wherein the computer program product comprises:
- code for acquiring, by a processing unit and using a data capturing arrangement, a first set of data representative of a surface located within a predetermined distance range from the data capturing arrangement,
- code for determining, by a processing unit, a distance to the surface based on the first set of data,
- code for acquiring, by the processing unit and using the data capturing arrangement, a second set of data representative of a human hand positioned at the surface,
- code for identifying, using the processing unit, a first hand feature and a second hand feature within the second set of data, and
- code for determining, by the processing unit, a distance between the first hand feature and the second hand feature, based on both of the determined distance to the surface and a defined thickness of the human hand.
